# EUROPEAN PATENT SPECIFICATION

(11) **EP 1 326 744 B1**
(45) Date of publication and mention of the grant of the patent: **04.08.2004**
(21) Application number: 01958253.5
(22) Date of filing: 21.08.2001
(51) Int. Cl.: B32B 27/08, B65D 81/26

(54) **MICROWAVEABLE LONG LIFE CONTAINERS**
MIKROWELLENBESTÄNDIGER BEHÄLTER MIT LANGER LEBENSDAUER
RECIPIENTS DE LONGUE DUREE, UTILISABLES AU FOUR A MICRO-ONDES

(30) Priority: 25.08.2000 GB 0021073
(43) Date of publication of application: 16.07.2003
(73) Proprietor: Huhtamaki van Leer Ltd., Gosport, Hampshire PO12 0PR (GB)
(72) Inventor: CARSON, James, Co. Down BT23 4RD, Northern Ireland (GB)
(74) Representative: Colmer, Stephen Gary
(86) International application number: PCT/GB2001/003750
(87) International publication number: WO 2002/016130

(56) References cited:
- US-A- 4 536 409
- US-A- 5 274 024
- DATABASE WPI Section Ch, Week 199310 Derwent Publications Ltd., London, GB; Class A92, AN 1993-079979 XP002182127 & JP 05 024146 A (TOPPAN PRINTING CO LTD), 2 February 1993 (1993-02-02)

## Description

This invention relates to a plastics container. More particularly, this invention relates to a container fabricated from a multi-layer plastics sheet, especially for perishable goods such as food and drink.

Hitherto, the long life (i.e. shelf life of one year or more) container of choice for perishable goods has been the traditional tin can. Plastics containers for perishable goods are well known and, unlike tin cans, their contents can successfully be heated by irradiation which microwaves. However, such containers do not provide a long shelf life for perishable contents. This is particularly the case where the contents are both cooked and sterilised; for example, by an aseptic filling (hydrogen peroxide sterilisation) or by a water immersion or a steam retort process.

This invention seeks to provide plastics containers which are microwaveable and which also provides a long life for perishable contents.

According, therefore, to one aspect of this invention, there is provided a microwaveable container which includes a multi-layer plastics sheet which, after fabrication into a container, has a thickness from 200 to 400 µm and which comprises
i) a gas barrier layer;
ii) a tie layer disposed contiguously on either side of layer i);
iii) one or more external layers, comprising from 30 to 20 % of the sheet thickness of plastics material adhered contiguously to one of the tie layers ii) wherein the plastics material comprises isotactic polypropylene; and
iv) an internal layer of plastics material which includes an oxygen scavenger, the layer being adhered contiguously to the other of the tie layers ii) wherein the plastics material comprises sotactic polypropylene.

Suitably, the sheet may further comprise a layer of plastics material v) contiguously adhered to layer iv) and not including an oxygen scavenger wherein the plastics material consists of isotactic polypropylene.

In a preferred embodiment of the invention, layer i) may comprise polyvinyl alcohol or an ethylene-vinyl alcohol copolymer, suitably wherein the degree of hydrolysis of the polyvinyl alcohol may be from 70 to 90%. It is preferred that the vinyl alcohol content of the ethylene-vinyl alcohol copolymer may be from 50 to 75%, preferably 55 to 70, such as 68% weight. The ethylene content of the copolymer may be from 25 to 45%, preferably 30 to 40% by weight.

Suitably, each tie layer ii) may comprise a graft copolymer of an unsaturated carboxylic acid or unsaturated carboxylic acid anhydride with polypropylene. Typically, the tie layer may comprise a graft polymer of maleic anhydride with propylene, especially isotactic polypropylene.

The oxygen scavenger may be any of the proprietary products available as such and which often incorporate polyhydroxy phenolic derivatives. Alternatively, they may include a transition metal in a lower oxidation state, for example Fe(II) which is oxidised to a higher oxidation state by trace oxygen which is thereby scavenged. The transition metal may be suitably masterbatched; for example with the plastics material, such as polypropylene, used. SHELFPLUS, especially SHELFPLUS 2500 has been found to be very suitable.

The sheet from which the container according to this invention is fabricated may be preparable by coextrusion. Desirably, it may have a thickness from 400 to 2500, such as 1000 to 1500, µm as prepared. It has a thickness from 200 to 400 µm after fabrication into a container.

In accordance with a preferred feature of this invention layer i) may comprise from 2.5 to 10%, preferably 3.0 to 8%, such as 6.5%, of the thickness of the sheet. Each tie layer ii), which may be the same or different, may compnse from 1 to 3%, such as 2% of the thickness of the sheet. The, or all of the layer(s) iii) comprises from 30 to 20% of the thickness of the sheet. Preferably, layer iii) does not include any added oxygen scavenger. The layer iv) may comprise from 35 to 55%, such as 43%, of the thickness of the sheet. Preferably, layer iv) comprises from 2 to 8%, such as 5%, by weight of oxygen scavenger. Below 2% the scavenger is unlikely to be effective while above 8% the scavenger has no additional effect and may adversely effect the mechanical properties of the sheet. The scavenger is suitably first masterbatched with the isotactic polypropylene from which (iv) is fabricated. Layer iv) may comprise up to 100% by weight ofregrind, typically 50% by weight of regrind. Preferably, layer v) comprises from 15 to 25%, such as 16.5% of the thickness of the sheet.

In accordance with an especially preferred embodiment of this invention, it is found that particularly beneficial effects are obtained when the gas barrier layer i) comprises from 3.0 to 8% of the thickness of the sheet while the concentration of oxygen scavenger in layer iv) comprises from 3 to 7% by weight of layer iv).

In accordance with a further aspect of the invention, there is provided a container according to the invention which is thermoformed.

It is highly desirable that the container of the invention may be subject to microwave radiation without loss of dimensional stability. Thus, the components of the layers, as fabricated, must not melt when irradiated with microwaves.

This invention also provides such containers which are filled and hermetically sealed. The sealing is preferably effected with a closure, such as a lid, fabricated from a sheet according to the invention. Suitably, the fill comprises a comestible or a beverage product. Desirably, the filled, sealed container is then sterilised, for example by autoclaving.

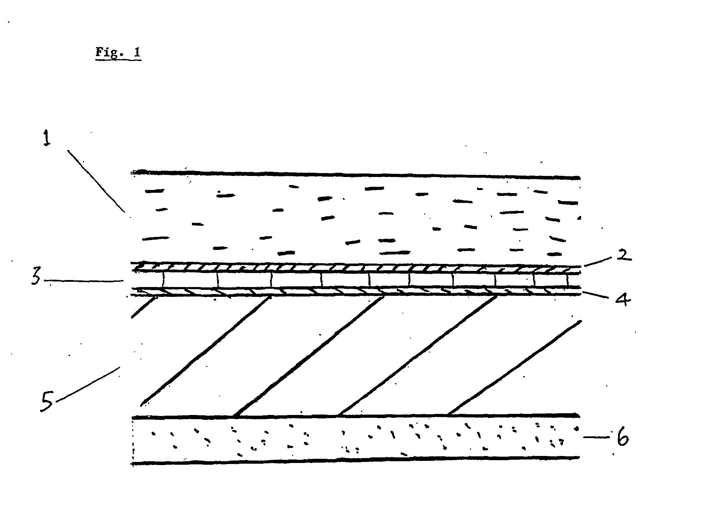

The invention is further illustrated, by way of example, with reference to the sole Figure which is a diagrammatic cross-section of the sheet according to this invention.

The production line includes blending equipment (eg. COLORTRONIC OR MAGUIRE blenders) for separately blending five different feedstocks. These feedstocks are then fed to five different extruders (eg. EGAN or KUHNE extruders) in which the material is heated, pressurised and mixed and next the five streams are fed, without mixing, to a layer delivery block which assembles the layers. A typical melt temperature is about 200°C. The molten multilayer structure is then spread through a die assembly which delivers a molten multilayer sheet to a cooled calender roll stack where the sheet is next solidified prior to being wound on to reels.

The sheet comprises an external layer (1) comprising 30% of the total thickness and comprising isotactic polypropylene and a copolymer of propylene (such as MONTEL T31SE and MONTEL EPT30R, respectively); a tie layer (2) comprising 2% of the total thickness and comprising a maleic anhydride-polypropylene graft copolymer (such as ADMER QF55IE); a barrier layer (3) comprising 6.5% of the total thickness and comprising ethylene-vinyl alcohol of 32% by weight polymerised ethylene content (such as EVAL T101B); a tie layer (4) as in (2); an internal layer (5) comprising 43% of the total thickness and comprising regrind including a total of 5% oxygen scavenger (such as SHELFPLUS 2500); a further layer (6) as in (1), but comprising 16.5% of the total thickness.

Containers are formed from the sheet using a thermoforming process in which a combination of air pressure, temperature and a mechanical forming assist or plug are used to fabricate the sheet in a thermoformer (eg ILLIG 70k) into the desired form for the container. Typical forming temperatures are around 180°C to 185°C such as 183°C.

The shelf life of the food with which the containers are filled and hermetically sealed can be in excess of 18 months. Significantly inferior results were obtained when the scavenger was included in layer iii) but not in layer iv).

## Claims

1. A microwaveable container which includes a multi-layer plastics sheet which, after fabrication into a container, has a thickness from 200 to 400µm and which comprises:
i) a gas barrier layer;
ii) a tie layer disposed contiguously on either side of layer i);
iii) one or more external layers, comprising from 30 to 20 % of the sheet thickness, of plastics material adhered contiguously to one of the tie layers ii) wherein the plastics material comprises isotactic polypropylene; and
iv) an internal layer of plastics material which includes an oxygen scavenger, the layer being adhered contiguously to the other of the tie layers ii) wherein the plastics material comprises isotactic polypropylene.

2. A container according to Clam 1 which further comprises a layer of plastics material v) contiguously adhered to layer iv) and not including an oxygen scavenger wherein the plastics material consists of isotactic polypropylene.

3. A container according to Claim 1 or 2 wherein layer i) comprises polyvinyl alcohol or an ethylene-vinyl alcohol copolymer.

4. A container according to Claim 3 wherein the degree of hydrolysis of the polyvinyl alcohol is from 70 to 90%.

5. A container according to Claim 3 wherein the vinyl alcohol content of the ethylene-vinyl alcohol copolymer is from 50 to 75%.

6. A container according to any preceding claim wherein each tie layer ii) comprises a graft copolymer of an unsaturated carboxylic acid or unsaturated carboxylic acid anhydride with polypropylene.

7. A container according to claim 6 wherein layer ii) comprises a graft copolymer of maleic anhydride with polypropylene.

8. A container according to any preceding claim wherein the oxygen scavenger comprises a polyhydroxy phenolic compound.

9. A container according to any preceding claim wherein the sheet of which the container is fabricated is preparable by coextrusion.

10. A container according to any preceding claim wherein layer i) comprises from 2.5 to 10% of the thickness of the container.

11. A container according to any preceding claim wherein each tie layer ii), which may be the same or different, comprises from 1 to 3% of the thickness of the container.

12. A container according to any preceding claim wherein the, or all of the layer(s) iii) comprise(s) from 30 to 20% of the thickness of the container.

13. A container according to any preceding claim where the layer iv) comprises from 35 to 55% of the thickness of the container.

14. A container according to any preceding claim wherein the layer iv) comprises from 2 to 8% by weight of oxygen scavenger.

15. A container according to any preceding claim wherein the layer iv) comprises from 20 to 80% by weight of regrind.

16. A container according to any one of Claims 2 to 19 wherein layer v) comprises from 15 to 25% of the thickness of the container.

17. A container according to any preceding claim which is thermoformed.

18. A container according to any preceding claim which may be subject to microwave radiation without loss of dimensional stability.

19. A container according to Claim 18 which is filled and hermetically sealed.

20. A container according to Claim 19 wherein the sealing is effected with closure fabricated from a sheet as defined in any of Claims 1 to 16.

21. A container according to Claim 19 or 20 wherein the fill comprises a comestible or a beverage product.

22. A filled sealed container according to any of Claims 19 to 21 which is then sterilised.

23. A filled sealed container according to Claim 22 wherein the sterilisation is effected prior to sealing with hydrogen peroxide or is effected after sealing with steam or with pressurised water at a temperature above 100°C.

## Patentansprüche

1. Mikrowellenfähiger Behälter bzw. Container, der ein mehrschichtiges Kunststoffblatt enthält, welches nach der Herstellung zu einem Behälter bzw. Container eine Dicke von 200 bis 500 µm hat, und welcher aufweist:
i) eine Gasbarriereschicht;
ii) eine Verbindungs- bzw. Anschlussschicht, die fortlaufend auf jeder Seite der Schicht i) angesetzt ist;
iii) eine oder mehrere äußere Schichten, die von 30 bis 20 % der Blattdicke aufweisen, aus Kunststoffmaterial, die fortlaufend an eine der Verbindungs- bzw. Anschlussschichten ii) angeklebt sind, wobei das Kunststoffmaterial isotaktisches Polypropylen aufweist; und
iv) eine interne Schicht aus Kunststoffmaterial, welches ein Sauerstoffspülmittel enthält, wobei die Schicht fortlaufend an die andere Verbindungs- oder Anschlussschicht ii) geklebt ist, wobei das Kunststoffmaterial isotaktisches Polypropylen aufweist.

2. Behälter bzw. Container gemäß Anspruch 1, welcher ferner eine Schicht aus Kunststoffmaterial v) aufweist, die fortlaufend an die Schicht iv) geklebt ist, und kein Sauerstoffspülmittel enthält, wobei das Kunststoffmaterial aus isotaktischem Polypropylen besteht.

3. Behälter bzw. Container gemäß Anspruch 1 oder 2, wobei die Schicht i) Polyvinylalkohol oder ein Ethylen-Vinyl-Alkoholcopolymer aufweist.

4. Behälter bzw. Container nach Anspruch 3, wobei der Hydrolysegrad des Polyvinylalkohols 70 bis 90 % beträgt.

5. Behälter bzw. Container nach Anspruch 3, wobei der Gehalt an Vinylalkohol des Ethylen-Alkoholcopolymer 70 bis 95 % beträgt.

6. Behälter bzw. Container nach einem der voranstehenden Ansprüche, wobei jede Verbindungs- bzw. Anschlusssschicht ii) ein Graftcopolymer einer ungesättigten Karbonsäure oder eines ungesättigten Karbonsäureanhydrids mit Polypropylen aufweist.

7. Behälter bzw. Container nach Anspruch 6, wobei die Schicht ii) ein Graftcopolymer von Maleinsäureanhydrid mit Polypropylen aufweist.

8. Behälter bzw. Container nach einem der voranstehenden Ansprüche, wobei das Sauerstoffspülmittel eine Polyhydroxi-Phenol-Zusammensetzung aufweist.

9. Behälter bzw. Container nach einem der voranstehenden Ansprüche, wobei das Blatt, aus dem der Behälter bzw. Container hergestellt ist, durch Koextrusion vorzubereiten bzw. herzustellen ist.

10. Behälter bzw. Container nach einem der voranstehenden Ansprüche, wobei die Schicht i) von 2,5 bis 10 % der Dicke des Behälters bzw. Containers aufweist.

11. Behälter bzw. Container nach einem der voranstehenden Ansprüche, wobei die Verbindungs- bzw. Anschlussschicht ii), welche die selbe oder unterschiedlich sein kann, von 1 bis 3 % der Dicke des Behälters bzw. Containers aufweist.

12. Behälter bzw. Container nach einem der voranstehenden Ansprüche, wobei die oder sämtliche der Schichten iii) von 30 bis 20 % der Dicke des Behälters aufweist.

13. Behälter bzw. Container nach einem der voranstehenden Ansprüche, wobei die Schicht iv) von 35 bis 55 % der Dicke des Behälters bzw. Containers aufweist.

14. Behälter bzw. Container nach einem der voranstehenden Ansprüche, wobei die Schicht iv) von 2 bis 8 Gew.-% des Sauerstoffspülmittels aufweist.

15. Behälter bzw. Container nach einem der voranstehenden Ansprüche, wobei die Schicht iv) von 20 bis 80 Gew.-% einer wieder gemahlenen Masse aufweist.

16. Behälter bzw. Container nach einem der Ansprüche 2 bis 15, wobei die Schicht v) von 15 bis 25 % der Dicke des Behälters bzw. Containers aufweist.

17. Behälter bzw. Container nach einem der voranstehenden Ansprüche, der thermisch geformt bzw. ausgebildet ist.

18. Behälter bzw. Container nach einem der voranstehenden Ansprüche, der einer Mikrowellenstrahlung ohne Verlust an Stabilität der Abmessungen ausgesetzt werden kann.

19. Behälter bzw. Container nach Anspruch 18, der gefüllt und hermetisch gedichtet ist.

20. Behälter bzw. Container nach Anspruch 19, wobei die Dichtung durch einen Verschluss bewirkt wird, der aus einem Blatt hergestellt ist, wie es in einem der Ansprüche 1 bis 16 bestimmt ist.

21. Behälter bzw. Container nach Anspruch 19 oder 20, wobei die Füllung ein Essprodukt oder ein Getränkeprodukt aufweist.

22. Gefüllter, gedichteter Behälter bzw. Container nach einem der Ansprüche 19 bis 21, der dann sterilisiert ist.

23. Gefüllter, gedichteter Behälter bzw. Container nach Anspruch 22, wobei die Sterilisation vor der Dichtung mit Wasserstoffperoxid bewirkt ist oder nach der Dichtung mit Dampf oder mit unter Druck gesetztem Wasser bei einer Temperatur oberhalb von 100 °C bewirkt wird.

## Revendications

1. Un récipient utilisable au four à micro-ondes qui comprend une feuille en matière plastique multicouches qui, après transformation pour en faire un récipient, présente une épaisseur de 200 à 400 µm et qui comprend :
i) une couche barrière au gaz ;
ii) une couche d'attache disposée de façon contiguë des deux côtés de la couche i) ;
iii) une ou plusieurs couches externes comprenant de 30 à 20 % de l'épaisseur de la feuille d'une matière plastique qui adhère de façon contiguë à l'une des couches d'attache ii), dans laquelle la matière plastique comprend du polypropylène isotactique ; et
iv) une couche interne de matière plastique qui comprend un piège à oxygène, la couche adhérant de façon contiguë à l'autre des couches d'attache ii) dans laquelle la matière plastique comprend du polypropylène isotactique.

2. Un récipient selon la revendication 1, qui comprend, en outre, une couche de matière plastique v) adhérant de façon contiguë à la couche iv) et ne comprenant pas un piège à oxygène, où la matière plastique comprend du polypropylène isotactique.

3. Un récipient selon la revendication 1 ou 2, dans lequel la couche i) comprend de l'alcool polyvinylique ou un copolymère alcool vinylique-éthylène.

4. Un récipient selon la revendication 3, dans lequel le degré d'hydrolyse de l'alcool polyvinylique est de 70 à 90 %.

5. Un récipient selon la revendication 3, dans lequel la teneur en alcool vinylique du copolymère alcool vinylique-éthylène est de 50 à 75 %.

6. Un récipient selon l'une quelconque des revendications précédentes, dans lequel chaque couche d'attache (ii) comprend un copolymère greffé d'un acide carboxylique insaturé ou d'anhydride d'acide carboxylique insaturé avec du polypropylène.

7. Un récipient selon la revendication 6, dans lequel la couche ii) comprend un copolymère greffé d'anhydride maléique avec du polypropylène.

8. Un récipient selon l'une quelconque des revendications précédentes, dans lequel le piège à oxygène comprend un composé polyhydroxy phénolique.

9. Un récipient selon l'une quelconque des revendications précédentes, dans lequel la feuille à partir de laquelle le récipient est fabriqué est apte à être préparée par coextrusion.

10. Un récipient selon l'une quelconque des revendications précédentes, dans lequel la couche i) comprend de 2,5 à 10 % de l'épaisseur du récipient.

11. Un récipient selon l'une quelconque des revendications précédentes, dans lequel chaque couche d'attache ii), qui peut être identique ou différente, comprend de 1 à 3 % de l'épaisseur du récipient.

12. Un récipient selon l'une quelconque des revendications précédentes, dans lequel la ou toutes les couche(s) iii) comprend/comprennent de 30 à 20 % de l'épaisseur du récipient.

13. Un récipient selon l'une quelconque des revendications précédentes, dans lequel la couche iv) représente de 35 à 55 % de l'épaisseur du récipient.

14. Un récipient selon l'une quelconque des revendications précédentes, dans lequel la couche iv) comprend de 2 à 8 % en poids du piège à oxygène.

15. Un récipient selon l'une quelconque des revendications précédentes, dans lequel la couche iv) comprend de 20 à 80 % en poids de produit rebroyé.

16. Un récipient selon l'une quelconque des revendications 2 à 19, dans lequel la couche v) représente de 15 à 25 % de l'épaisseur du récipient.

17. Un récipient selon l'une quelconque des revendications précédentes, qui est thermoformé.

18. Un récipient selon l'une quelconque des revendications précédentes, qui peut être soumis au rayonnement micro-onde sans perte de stabilité dimensionnelle.

19. Un récipient selon la revendication 18, qui est rempli et scellé hermétiquement.

20. Un récipient selon la revendication 19, dans lequel le scellage est réalisé avec une fermeture fabriquée à partir d'une feuille telle que définie dans l'une quelconque des revendications 1 à 16.

21. Un récipient selon l'une des revendications 19 ou 20, dans lequel le remplissage comprend un produit comestible ou une boisson.

22. Un récipient scellé de façon étanche rempli selon l'une quelconque des revendications 19 à 21, qui est ensuite stérilisé.

23. Un récipient scellé rempli selon la revendication 22, dans lequel la stérilisation est effectuée avant le scellage étanche avec du peroxyde d'hydrogène ou est effectuée après le scellage avec de la vapeur ou avec de l'eau pressurisée à une température supérieure à 100° C.
